# EUROPÄISCHE PATENTSCHRIFT

(11) **EP 3 793 706 B1**
(45) Veröffentlichungstag und Bekanntmachung des Hinweises auf die Patenterteilung: **19.07.2023**
(21) Anmeldenummer: 19728617.2
(22) Anmeldetag: 29.05.2019
(51) Int. Cl.: B01D 35/027, B01D 36/00

(54) **SAUGFILTER**
SUCTION FILTER
FILTRE D'ASPIRATION

(30) Priorität: 01.08.2018 DE 102018006041
(43) Veröffentlichungstag der Anmeldung: 24.03.2021
(73) Patentinhaber: Hydac Filtertechnik GmbH, 66280 Sulzbach/Saar (DE)
(72) Erfinder: WENGEREK, Christian Karl, 66606 St. Wendel (DE); MORGENS, Klaus, 54293 Trier (DE); THIELEN, Martin Johann, 54343 Föhren (DE)
(74) Vertreter: Bartels und Partner, Patentanwälte
(86) Internationale Anmeldenummer: PCT/EP2019/063909
(87) Internationale Veröffentlichungsnummer: WO 2020/025192

(56) Entgegenhaltungen:
- EP-A1- 3 311 899
- DE-T5-112014 007 014
- US-A- 3 722 686
- US-A- 5 049 267
- US-A1- 2012 067 807

## Beschreibung

Die Erfindung betrifft einen Saugfilter mit den Merkmalen im Oberbegriff von Anspruch 1.

Um die Betriebssicherheit von Fluidsystemen zu gewährleisten, sind die Fluidkreisläufe in der Regel mit Filteranlagen, wie Saugfiltern, ausgerüstet. Beim Betrieb der Fluidsysteme kann es bekanntermaßen bei einer Anreicherung von Gas, wie von Luft in den benutzten Hydraulikfluiden, zu einer Beeinträchtigung von Systemkomponenten und deren Funktion kommen.

Die Kombination eines Filterelements mit einer Entgasungseinrichtung ist an sich bekannt. Das Dokument DE 10 2008 029 203 A1 zeigt diesbezüglich eine gattungsfremde Vorrichtung zur Medientrennung, bei der innerhalb eines Filterelements eine Entgasungseinrichtung in Form eines Zyklonabscheiders angeordnet ist. Da die Funktion des Zyklonabscheiders vom Systemdruck des zuströmenden Fluids abhängig ist, ist die bekannte Vorrichtung zur Medientrennung lediglich im Druckfilterbetrieb betreibbar.

Die DE 11 2014 007 014 T5 beschreibt einen Saugfilter mit den Merkmalen im Oberbegriff von Anspruch 1 mit mindestens einem Filterelement, das eine Filtratseite umfasst, die an einen Sauganschluss des Saugfilters angeschlossen ist, wobei das Filterelement eine Entgasungseinrichtung aufweist, wobei die Entgasungseinrichtung bei stillgesetztem Betrieb des Filterelements auf seiner Filtratseite befindliche Gase, wie Luft, nach außen auf die Unfiltratseite abführt, wobei die Entgasungseinrichtung, als Endkappe ausgebildet, das Filterelement auf seiner dem Sauganschluss gegenüber-liegenden Seite abschließt und mit mindestens einer Ventilklappe versehen ist, die im Filtrierbetrieb geschlossen und bei stillgesetztem Betrieb, bei dem kein Saugdruck am Sauganschluss wirkt, unter der Wirkung des Drucks aufsteigender Gasblasen öffnet und diese von der Filtratseite auf die Unfiltratseite entlässt.

Weitere Saugfilter gehen aus der US 5 049 267 A2, der EP 3 311 899 A1, der US 2012/0067807 A1 und der DE 10 2008 029 203 A1 hervor.

Im Hinblick auf diese Problematik stellt sich die Erfindung die Aufgabe, ein Saugfilter zur Verfügung zu stellen, das den sicheren Betrieb von dem Filter zugeordneten Fluidkreisläufen auch bei einer Anreicherung des Fluids mit Gasen, wie Luft, gewährleistet.

Gemäß dem Patentanspruch 1 ist diese Aufgabe erfindungsgemäß bei einem Saugfilter der eingangs genannten Gattung dadurch gelöst, dass das Filterelement eine Entgasungseinrichtung aufweist.

Gemäß dem Kennzeichen von Anspruch 1 ist vorgesehen, dass die Ventilklappe aus einer elastisch nachgiebigen Platte gebildet ist, die, im Zentrum der Endkappe festgelegt, Fluiddurchlässe der Endkappe sperrend überdeckt oder zumindest teilweise freigibt.

Bei besonders vorteilhaften Ausführungsbeispielen weist die Endkappe einzelne, nach außen sich erstreckende Kammern auf, die von Stützstegen mit begrenzt sind, die sich strahlenförmig in leicht konkav gekrümmtem Verlauf vom Zentrum weg ansteigend zu einer entsprechend gekrümmten Ringfläche hin erstrecken, die innerhalb eines vorstehenden Randes der Endkappe entlang deren Umfang verläuft, wobei die Kammern bodenseitig von einem Bodenteil abgeschlossen sind, das von Schlitzen durchgriffen ist, die die medienseitige Verbindung von der Filtratseite zu der jeweils zuordenbaren Kammer in der Endkappe herstellen.

Mit besonderem Vorteil kann die Anordnung hierbei so getroffen sein, dass die Ventilklappe kreisrund ausgeführt ist, entlang ihres Umfangs durch einen Ringrand mit vergrößerter Wanddicke verstärkt ist und in ihrem die Fluiddurchlässe sperrenden Zustand unter dem Einfluss des Saugdrucks am Sauganschluss entlang ihres Ringrandes an der Ringfläche der Endkappe anliegt.

Vorteilhafterweise ist die Ventilklappe auf der von den Kammern abgewandten Seite mit nach außen von ihrem Zentrum sich zum Ringrand erstreckenden Aussteifungsstegen versehen. Die Gefahr der Bildung eines Bypasses unter Einfluss des Saugdrucks im Filtrierbetrieb durch Verbiegen der Ventilklappe ist dadurch vermieden.

Bei vorteilhaften Ausführungsbeispielen ist die Ventilklappe in ihrem Zentrum über einen Befestigungsknopf an der Endkappe festgeknüpft.

Mit besonderem Vorteil kann das Filterelement plissiert und mit gerundeten Filterfalten ausgebildet sein, wobei für die Filterfalten eine zugeordnete Stützstruktur vorgesehen sein kann, beispielsweise in der Form eines Meshpack.

Gemäß dem Patentanspruch 7 ist Gegenstand der Erfindung auch eine Fluidvorrichtung, mit einem Fluidgehäuse, nämlich einem Tankgehäuse, an dessen einer Tankwand der Sauganschluss eines Saugfilters nach einem der Ansprüche 1 bis 6 derart festgelegt ist, dass das Filterelement in zumindest näherungsweise horizontaler Ausrichtung in ein Gehäuseinneres, respektive Tankinneres, hineinragt.

Nachstehend ist die Erfindung anhand eines in der Zeichnung dargestellten Ausführungsbeispiels im Einzelnen erläutert. Es zeigen:
- Fig. 1: einen schematisch vereinfachten Längsschnitt des an einer Tankwand angebrachten Ausführungsbeispiels des erfindungsgemäßen Saugfilters;
- Fig. 2: eine gegenüber Fig. 1 größer gezeichnete und explosionsartig auseinandergezogene perspektivische Schrägansicht einer Endkappe des Ausführungsbeispiels; und
- Fig. 3: einen gegenüber Fig. 2 weiter vergrößerten Teillängsschnitt des an die Endkappe von Fig. 2 angrenzenden Bereichs des Ausführungsbeispiels.

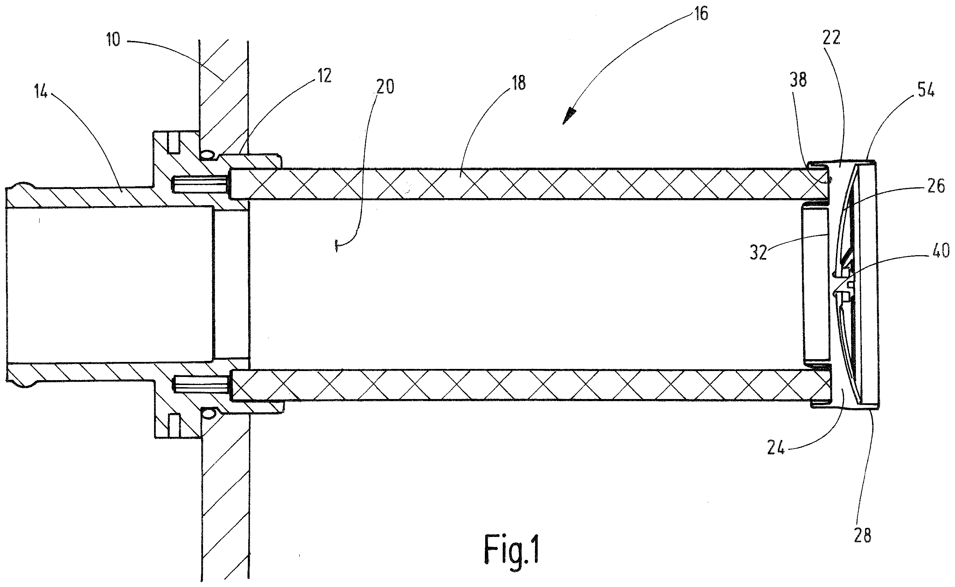

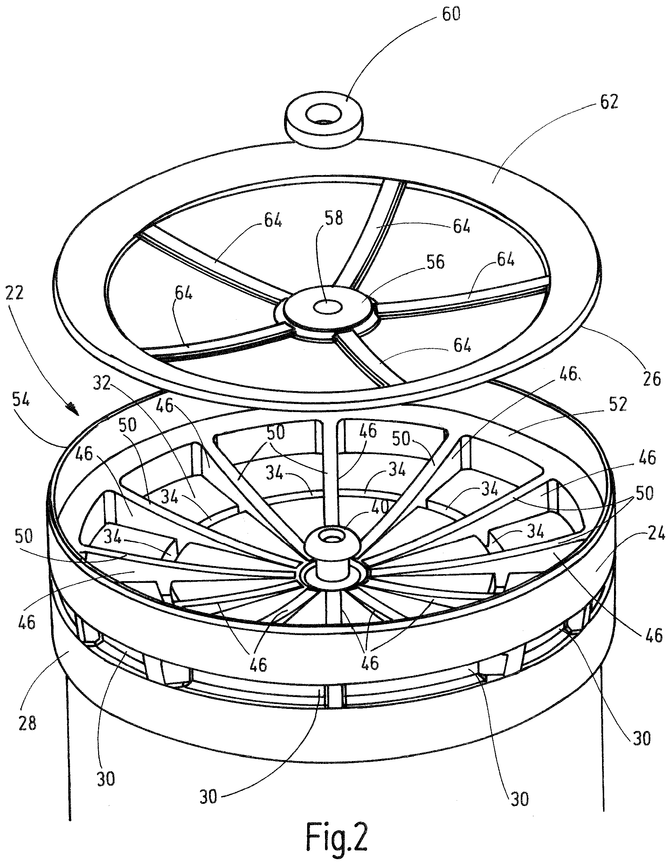

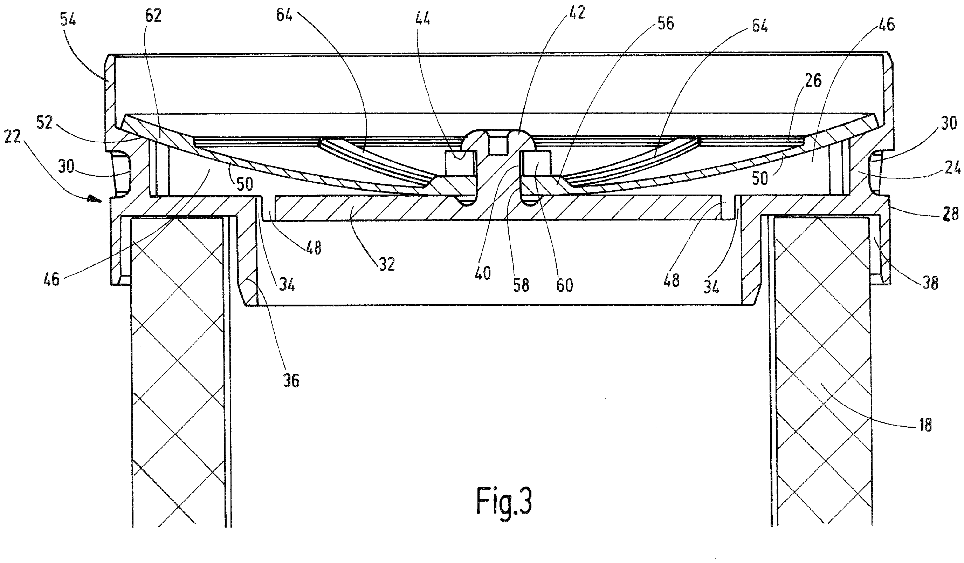

In Fig. 1 ist ein Teil einer Tankwand mit 10 bezeichnet, die sich in vertikaler Aufstellrichtung erstreckt und zu einem im Übrigen nicht dargestellten Tank gehört, der zur Bevorratung von einem Fluid, wie Hydrauliköl, gehört. An einer Öffnung 12 der Tankwand ist ein Sauganschluss 14 angebracht, der mit der Saugseite eines nicht gezeigten Fluidkreislaufs in Verbindung ist. Ein Filterelement 16 ist mit einem Ende seines hohlzylinderförmigen Filtermaterials 18 am Sauganschluss 14 derart festgelegt, dass der vom Filtermaterial 18 umgebene innere Filterhohlraum 20 zum Sauganschluss 14 offen ist und sich von der Tankwand 10 weg in horizontaler Richtung in das Tankinnere erstreckt. Mit der erfindungsgemäßen Lösung funktioniert die Entgasung sowohl in vertikaler als auch in horizontaler Lage des Filterelementes. An dem im Tankinneren befindlichen inneren Ende ist am Filtermaterial 18 eine Endkappe 22 angebracht, die eine Entgasungseinrichtung bildet, deren nähere Einzelheiten den Fig. 2 und 3 deutlicher entnehmbar sind. Das Filtermaterial 18 des Filterelements 16, das aus einer plissierten Filtermatte mit gerundeten Filterfalten gebildet ist, trennt beim Filtervorgang den Tankinnenraum als Unfiltratseite von der Filtratseite im inneren Filterhohlraum 20. Die plissierte Filtermatte des Filtermaterials 18 kann mehrlagig sein und eine Stützstruktur aufweisen, beispielsweise in der Art eines Meshpack.

Die Endkappe 22 weist als Hauptteile einen Grundkörper 24 und eine Ventilklappe 26 auf. Der Grundkörper 24 ist aus einem Kunststoffwerkstoff, wie PA, einstückig hergestellt, vorzugsweise unter Einsatz eines 3D-Druckverfahrens. Der Grundkörper 24 weist einen Umfangsrand 28 auf, der einen kreiszylinderförmigen Außenmantel bildet, der von Vertiefungen 30 unterbrochen ist. In zur Längserstreckung des Filtermaterials 18 senkrechter Ebene erstreckt sich zwischen dem Umfangsrand 28 ein ebenflächiges Bodenteil 32, das von Schlitzen 34 durchbrochen ist. Wie Fig. 2 zeigt, verlaufen die Schlitze 34 auf einer zum Umfangsrand 28 konzentrischen Kreislinie. An die Schlitze 34 radial nach außen anschließend erstreckt sich vom Bodenteil 32 weg entlang des Filtermaterials 18 ein Innenring 36, der zusammen mit dem Umfangsrand 28 eine Einfassung 38 für das zugewandte Ende des Filtermaterials 18 bildet. Auf der in Fig. 2 und 3 obenliegenden Oberseite des Bodenteils 32 befindet sich in dessen Zentrum ein nach oben vorstehender Halteknopf 40 mit einem gerundeten Pilzkopf 42, unterhalb dessen sich eine Hinterschneidung 44 befindet (Fig. 2). Durch Bilden einer Schnappverbindung ist, wie unten näher ausgeführt, an der Hinterschneidung 44 die Ventilklappe 26 festlegbar.

Wie am deutlichsten der Fig. 2 entnehmbar ist, sind auf dem Bodenteil 32 durch Stützstege 46, die sich vom Zentrum strahlenförmig in radialer Richtung weg erstrecken, Kammern abgeteilt. Wie Fig. 3 zeigt, weisen die Stege 46 von der auf dem Bodenteil 32 aufliegenden Unterseite weg vorstehende Vorsprünge 48 auf, die die Schlitze 34 in Umfangsrichtung voneinander trennen. Wie am deutlichsten der Fig. 3 entnehmbar ist, erstrecken sich die Stege 46 mit ihrer Oberseite 50 in leicht konkav gekrümmtem Verlauf radial nach außen ansteigend zu einer Ringfläche 52, die sich innerhalb eines nach oben vorstehenden Endteils 54 des Umfangsrandes 28 entlang des Umfangs erstreckt. Diese Ringfläche 52 setzt die konkave Krümmung der Oberseite 50 der Stege 46 fort.

Die Ventilklappe 26 ist in der Art einer Membran aus einer kreisrunden, nachgiebigen Platte gebildet. Im Zentrum weist die Ventilklappe 26 eine Wandverdickung in Form einer runden Nabe 56 mit koaxialer Öffnung 58 auf. Zusammen mit einer Ringscheibe 60 ist die Ventilklappe 26 hinter der Hinterschneidung 44 des Pilzkopfes 42 des Befestigungsknopfes 40 festlegbar (s. Fig. 3). Bei diesem Zustand liegt die Ventilklappe 26 in leicht gewölbter Form an der inneren Ringfläche 52 des Grundkörpers 24 an, die die Ventildichtfläche bildet. In ihrem Umfangsbereich weist die Ventilklappe 26 einen in der Wandstärke verdickten Ringrand 62 auf. Zwischen der verdickten Nabe 56 und dem verdickten Ringrand 62 erstrecken sich in Form von Speichen fünf Aussteifungen 64, die, wie die Nabe 56 und der Ringrand 62, durch Wandverdickungen der Platte der Ventilklappe 26 gebildet sind.

Bei Filtrierbetrieb mit am Sauganschluss 14 und im Filterhohlraum 20 herrschendem Unterdruck liegt die Ventilklappe 26 im Bereich ihres Ringrandes 62 an der die Ventildichtfläche bildenden Ringfläche 52 an, so dass der Fluiddurchgang durch die Schlitze 34 gesperrt ist. Die Aussteifungen 64 verhindern, dass sich im Filterbetrieb durch die wirkende Saugkraft die membranartige Ventilklappe 26 zwischen den Auflagestellen an der Oberseite 50 der Stege 46 verwirft und es zu einem Verlust der Abdichtung kommt, was das Bilden eines Bypasses zur Filtratseite im Hohlraum 20 zur Folge hätte.

Die vor einer Erstbefüllung des Systems mit Fluid im Saugfilter befindliche Luft wird beim Füllvorgang unter Abheben der Ventilklappe 26 ausgeschoben. Im Filtrierbetrieb, bei dem die Ventilklappe 26 geschlossen ist, bildet sich im Saugfilter eine Lufttasche als Ansammlung von im System befindlicher freier Luft. Bei Unterbrechung des Betriebs und Stillsetzen der Saugpumpe, so dass am Sauganschluss 14 kein Saugdruck wirkt, kommt es unter der Wirkung des Drucks von im Fluid aus der Lufttasche aufsteigenden Luftblasen zum Öffnen der Ventilklappe 26 und damit zum Austritt zum im Tank befindlichen Fluid, wo sich die Phasentrennung unter Schwerkraftabscheidung fortsetzt.

## Patentansprüche

1. Saugfilter mit mindestens einem Filterelement (18), das eine Filtratseite (20) umfasst, die an einen Sauganschluss (14) des Saugfilters angeschlossen ist, wobei das Filterelement (18) eine Entgasungseinrichtung (22) aufweist,
wobei die Entgasungseinrichtung (22) bei stillgesetztem Betrieb des Filterelements (18) auf seiner Filtratseite (20) befindliche Gase, wie Luft, nach außen auf die Unfiltratseite abführt,
wobei die Entgasungseinrichtung, als Endkappe (22) ausgebildet ist, das Filterelement (18) auf seiner dem Sauganschluss (14) gegenüberliegenden Seite abschließt und mit mindestens einer Ventilklappe (26) versehen ist, die im Filtrierbetrieb geschlossen und bei stillgesetztem Betrieb, bei dem kein Saugdruck am Sauganschluss (14) wirkt, unter der Wirkung des Drucks aufsteigender Gasblasen öffnet und diese von der Filtratseite (20) auf die Unfiltratseite entlässt,
**dadurch gekennzeichnet,**
**dass** die Ventilklappe (26) aus einer elastisch nachgiebigen Platte gebildet ist, die, im Zentrum (40) der Endkappe (22) festgelegt, Fluiddurchlässe (34) der Endkappe (22) sperrend überdeckt oder zumindest teilweise freigibt.

2. Saugfilter nach Anspruch 1, **dadurch gekennzeichnet, dass** die Endkappe (22) einzelne, sich vom Zentrum (40) nach außen erstreckende Kammern aufweist, die von Stützstegen (46) mit begrenzt sind, die sich strahlenförmig in leicht konkav gekrümmtem Verlauf vom Zentrum (40) weg ansteigend zu einer entsprechend gekrümmten Ringfläche (52) hin erstrecken, die innerhalb eines vorstehenden Randes (54) der Endkappe (22) entlang deren Umfang (28) verläuft, und dass die Kammern von einem Bodenteil (32) bodenseitig abgeschlossen sind, das von Schlitzen (34) durchgriffen ist, die die medienseitige Verbindung von der Filtratseite (20) zu der jeweils zuordenbaren Kammer in der Endkappe (22) herstellen.

3. Saugfilter nach Anspruch 2, **dadurch gekennzeichnet, dass** die Ventilklappe (26) kreisrund ausgeführt ist, entlang ihres Umfangs durch einen Ringrand (62) mit vergrößerter Wanddicke verstärkt ist und in ihrem die Fluiddurchlässe sperrenden Zustand unter dem Einfluss des Saugdrucks am Sauganschluss (14) entlang ihres Ringrandes (62) an der Ringfläche (52) der Endkappe (22) anliegt.

4. Saugfilter nach Anspruch 2 oder 3, **dadurch gekennzeichnet, dass** die Ventilklappe (26) auf der von den Kammern abgewandten Seite mit nach außen von ihrem Zentrum (56) sich zum Ringrand (62) erstreckenden Aussteifungsstegen (64) versehen ist.

5. Saugfilter nach einem der vorstehenden Ansprüche, **dadurch gekennzeichnet, dass** die Ventilklappe (26) in ihrem Zentrum (56) über einen Befestigungsknopf (40) an der Endkappe (22) festgeknüpft ist.

6. Saugfilter nach einem der vorstehenden Ansprüche, **dadurch gekennzeichnet, dass** das Filterelement (18) plissiert und mit gerundeten Filterfalten ausgebildet ist.

7. Fluidvorrichtung mit einem Fluidgehäuse, nämlich einem Tankgehäuse, an dessen einer Tankwand (10) der Sauganschluss (14) eines Saugfilters nach einem der vorstehenden Ansprüche derart festgelegt ist, dass das Filterelement (18) in horizontaler Ausrichtung in ein Gehäuse- respektive Tankinneres hineinragt.

## Claims

1. Suction line filter having at least one filter element (18) comprising a filtrate side (20) which is connected to a suction connection (14) of the suction line filter, wherein the filter element (18) has a degassing device (22),
wherein the degasssing device (22) discharges gases, such as air, present on its filtrate side (20) to the outside on the unfiltered medium side when operation of the filter element (18) is shut down,
wherein the degassing device, configured as an end cap (22), closes off the filter element (18) on its side opposing the suction connection (14) and is provided with at least one valve flap (26) which is closed during filtration mode and opens during shutdown mode, in which no suction pressure acts on the suction connection (14), under the effect of the pressure of rising gas bubbles and discharges them from the filtrate side (20) to the unfiltered medium side,
**characterised in that**
the valve flap (26) is formed of a resiliently yielding plate which, fixed in the centre (40) of the end cap (22), covers fluid apertures (34) of the end cap (22) in a blocking manner or at least partially unblocks them.

2. Suction line filter according to claim 1, **characterised in that** the end cap (22) comprises individual chambers extending outwards from the centre (40), the chambers being bounded by support ribs (46) which extend radially in a slightly concave curved path rising away from the centre (40) to a correspondingly curved annular surface (52) which extends within a protruding edge (54) of the end cap (22) along the circumference (28) thereof, and **in that** the chambers are closed off on the bottom side by a base part (32) which is penetrated by slots (34) which establish the media-side connection from the filtrate side (20) to the respectively assignable chamber in the end cap (22).

3. Suction line filter according to claim 2, **characterised in that** the valve flap (26) is circular, is reinforced along its circumference by an annular rim (62) of increased wall thickness and, in its state blocking the fluid apertures, bears along its annular rim (62) against the annular surface (52) of the end cap (22) under the influence of the suction pressure on the suction connection (14).

4. Suction line filter according to claim 2 or 3, **characterised in that** the valve flap (26) is provided on the side directed away from the chambers with stiffening ribs (64) extending outwards from its centre (56) towards the annular rim (62).

5. Suction line filter according to one of the preceding claims, **characterised in that** the valve flap (26) is permanently attached in its centre (56) to the end cap (22) via a fastener button (40).

6. Suction line filter according to one of the preceding claims, **characterised in that** the filter element (18) is pleated and configured with rounded filter pleats.

7. Fluid device having a fluid housing, namely a tank housing, on the tank wall (10) of which the suction connection (14) of a suction line filter according to one of the preceding claims is fixed in such a manner that the filter element (18) protrudes into a housing or tank interior in a horizontal orientation.

## Revendications

1. Filtre d'aspiration comprenant au moins un élément (18) de filtre, qui comprend un côté (20) du filtrat raccordé à un raccord (14) d'aspiration du filtre d'aspiration, dans lequel l'élément (18) de filtre a un dispositif (22) de dégazage,
dans lequel le dispositif (22) de dégazage évacue vers l'extérieur du côté du non filtrat, lorsque l'élément (18) de filtre est en fonctionnement à l'arrêt, des gaz, comme de l'air, se trouvant sur son côté (20) du filtrat,
dans lequel le dispositif de dégazage est constitué sous la forme d'une coiffe (22) d'extrémité, qui ferme l'élément (18) de filtre sur son côté opposé au raccord (14) d'aspiration et qui est pourvu d'au moins un volet (26) de soupape, qui est fermé en fonctionnement en filtration et qui, en fonctionnement à l'arrêt, dans lequel une pression d'aspiration ne s'applique pas au raccord (14) d'application, s'ouvre pour des bulles de gaz ascendantes sous l'effet de la pression et les renvoie du côté (20) du filtrat au côté du non filtrat,
**caractérisé**
**en ce que** le volet (26) de soupape est formé d'une plaque cédant élastiquement, qui, fixée au centre (40) de la coiffe (22) d'extrémité, recouvre avec blocage ou du moins dégage partiellement des traversées (34) pour du fluide de la coiffe (22) d'extrémité.

2. Filtre d'aspiration suivant la revendication 1, **caractérisé en ce que** la coiffe (22) d'extrémité a diverses chambres, qui s'étendent du centre (40) vers l'extérieur, qui sont délimitées par des entretoises (46) d'appui, lesquelles s'étendent en forme de rayons suivant une courbe incurvée légèrement concave en s'élevant en d'éloignant du centre (40) à une surface (52) annulaire incurvée de manière correspondante, qui s'étend à l'intérieur d'un bord (54) en saillie de la coiffe (22) d'extrémité le long de son pourtour (28), et **en ce que** les chambres sont fermées du côté du fond par une partie (32) de fond, qui est traversée par des fentes (34), lesquelles produisent la liaison, du côté fluides, du côté (20) du filtrat à la chambre pouvant être associée respectivement dans la coiffe (22) d'extrémité.

3. Filtre d'aspiration suivant la revendication 2, **caractérisé en ce que** le volet (26) de soupape est circulaire et renforcé, du côté de son pourtour, par un bord (62) annulaire d'une épaisseur de paroi plus grande et, dans son état bloquant les traversées pour du fluide, s'applique, sous l'influence de la pression d'aspiration du raccord (14) d'aspiration, le long de son bord (62) annulaire à la surface (52) annulaire de la coiffe (22) d'extrémité.

4. Filtre d'aspiration suivant la revendication 2 ou 3, **caractérisé en ce que** le volet (26) de soupape est pourvu, du côté non tourné vers les chambres, d'entretoises (64) de raidissement s'étendant vers l'extérieur de son centre (56) au bord (62) annulaire.

5. Filtre d'aspiration suivant l'une des revendications précédentes, **caractérisé en ce que** le volet (26) de soupape est bien fixé en son centre (56) à la coiffe (22) d'extrémité par un bouton (40) de fixation.

6. Filtre d'aspiration suivant l'une des revendications précédentes, **caractérisé en ce que** l'élément (18) de filtre est plissé et est constitué de plis de filtre arrondis.

7. Installation pour du fluide, à savoir enveloppe de réservoir, ayant une enveloppe pour du fluide à l'une des parois (10), de laquelle le raccord (14) d'un filtre d'aspiration suivant l'une des revendications précédentes est fixé de manière à ce que l'élément (18) de filtre pénètre dans une direction horizontale à l'intérieur de l'enveloppe respectivement du réservoir.
